## Europäisches Patentamt
## European Patent Office
## Office européen des brevets

(19)

(11) Numéro de publication: **0 100 947**
**B1**

(12) # FASCICULE DE BREVET EUROPÉEN

(45) Date de publication du fascicule du brevet:
**15.10.86**

(51) Int. Cl.⁴: **C 09 D 17/00,** C 09 C 3/00

(21) Numéro de dépôt: **83107237.6**

(22) Date de dépôt: **23.07.83**

(54) **Agent de broyage à base de polymères et/ou copolymères neutralisés pour suspensions aqueuses de matériaux minéraux grossiers en vue d'applications pigmentaires.**

(30) Priorité: **06.08.82 FR 8214029**

(43) Date de publication de la demande:
**22.02.84 Bulletin 84/8**

(45) Mention de la délivrance du brevet:
**15.10.86 Bulletin 86/42**

(84) Etats contractants désignés:
**AT BE CH DE GB IT LI NL SE**

(56) Documents cité:
**EP-A-0 046 573**

**Le dossier contient des informations techniques présentées postérieurement au dépôt de la demande et ne figurant pas dans le présent fascicule.**

(73) Titulaire: **Société COATEX, Société Anonyme, 35 Cours Aristide Briand, F-69300 Caluire (FR)**

(72) Inventeur: **Ravet, George, La Guigonnière Route de Lyon, St.Genis Les Ollières F-69290 Craponne (FR)**
Inventeur: **Rousset, Jacky, Baneins, F-01400 Chatillon sur Chalaronne (FR)**
Inventeur: **Gonnet, Olivier, Les Douze St. Jean de Thurigneux, F-01390 St. André de Corcy (FR)**

(74) Mandataire: **Eggert, Hans- Gunther, Dr., Räderscheidtstrasse 1, D-5000 Köln 41 (DE)**

LIBER, STOCKHOLM 1986

## Description

L'invention concerne un agent amélioré de broyage en suspension aqueuse de matériaux minéraux grossiers, constitué par des polymères et/ou copolymères acryliques acides complètement neutralisés au moyen d'au moins un agent de neutralisation disposant d'une fonction monovalente et d'au moins un agent de neutralisation disposant d'une fonction polyvalente, agent de broyage permettant d'obtenir une suspension aqueuse de particules minérales affinées, destinées en particulier à des applications pigmentaires de dimension inférieure à deux microns et dont au moins 75% d'entre elles ont une dimension inférieure à un micron.

L'invention concerne également l'application nouvelle dudit agent de broyage dans le procédé amélioré de préparation par broyage d'une suspension aqueuse de matériaux minéraux dont la viscosité reste stable dans le temps, assurant ainsi une grande facilité de manipulation et d'application, ledit procédé s'appliquant particulièrement bien au broyage d'une suspension aqueuse de carbonate de calcium dont la teneur en matière sèche est d'au moins 70% en poids, dont au moins 95% des particules constitutives après broyage, ont une dimension inférieure à deux microns, tandis que 75% d'entre elles ont une dimension inférieure à un micron.

Depuis longtemps déjà, il est connu d'utiliser des substances minérales telles que les Carbonate, Sulfate et Silicate de Calcium, ainsi que le Dioxyde de Titane pour la préparation de produits industriels destinés aux domaines des peintures, de l'enduction du papier, des charges pour caoutchoucs et résines synthétiques, etc...

Mais comme ces substances minérales ne possèdent pas une structure naturelle lamellaire ou feuilletée facilitant leur délitage, comme c'est la cas de certaines substances telles que les Silicates d'Aluminium habituellement connus sous le nom de Kaolin, l'homme de l'art doit les transformer par broyage en une suspension aqueuse de grande finesse dont les grains constitutifs ont une dimension la plus faible possible, c'est-à-dire inférieure à quelques microns, pour pouvoir les utiliser dans le domaine pigmentaire.

Par le nombre des publications faites dans ce domaine, la littérature spécialisée révèle l'importance et la complexité du broyage en milieu aqueux de substances minérales pour obtenir une qualité partiellement affinée autorisant une application pigmentaire. C'est ainsi que dans le cas particulier de l'enduction des papiers, il est bien connu que la masse d'enduction formée de pigments minéraux tels que les Kaolins, le Carbonate de Calcium, le Sulfate de Calcium, ainsi que le Dioxyde de Titane mis en suspension dans l'eau, contient également des agents liants et dispersants ainsi que d'autres adjuvants tels que des épaississants et des agents de coloration. Or, il est souhaitable qu'une telle masse d'enduction dispose d'une viscosité faible et stable pendant la durée de l'enduction pour en faciliter la manipulation et l'application de même qu'une teneur en matière minérale la plus élevée possible afin de diminuer la quantité d'énergie calorifique nécessaire à l'évacuation par séchage de la fraction aqueuse de la masse d'enduction. Une telle suspension, idéale, réunissant toutes ces qualités fondamentales, résoudrait pour l'homme de l'art les problèmes bien connus de broyage, de stockage, de transport du lieu de production vers le lieu d'application, enfin de transfert par pompe lors de son utilisation.

Or, il a été constaté que les techniques de broyage en milieu aqueux de substances minérales conduisaient à des suspensions instables dans le temps en raison des effets de sédimentation des substances minérales et d'augmentation de la viscosité. C'est pourquoi l'homme de l'art s'est résigné, dans les procédés appartenant aux techniques les plus anciennes d'obtention par broyage de substances pigmentaires, à réaliser le broyage en suspension aqueuse de la substance minérale, selon une ou plusieurs opérations successives, puis à sécher et à classifier cette substance broyée en éliminant les particules insuffisamment fines, à séparer les particules minérales ayant la dimension pigmentaire souhaitée, afin d'obtenir une fine poudre minérale à faible teneur en eau. Ainsi cette fine poudre destinée aux applications pigmentaires est facilement transportable de son lieu de production vers celui de l'utilisation où elle est à nouveau mise en suspension dans l'eau pour être utilisée comme produit pigmentaire.

Dès lors, le fait de ne pas pouvoir conserver la substance minérale pigmentaire sous la forme d'une suspension aqueuse entre les opérations de broyage et d'application, a incité l'homme de l'art à poursuivre des recherches en ce domaine, recherches qui consistent en la réalisation de broyage de substances minérales en suspension aqueuse, donnant après broyage une suspension pigmentaire de viscosité faible et stable dans le temps. C'est ainsi, par exemple, qu'est proposé dans le brevet français n° 1 509 724 un procédé de préparation par broyage d'une suspension aqueuse de Carbonate de Calcium, stable dans le temps, qui consiste à former sous agitation une suspension aqueuse contenant 25 à 50% en poids de Carbonate de Calcium et à broyer cette matière aqueuse au moyen d'un corps broyant approprié, en présence d'un agent dispersant. Cet agent dispersant est un polymère acrylique soluble dans l'eau, que l'on ajoute au milieu de broyage à raison de 0,2 à 0,4% en poids du Carbonate de Calcium présent. Or, malgré l'indéniable avantage de disposer d'une suspension minérale pigmentaire de bonne stabilité dans le temps, il apparait qu'une telle suspension présente des inconvénients qui peuvent être considérés comme majeurs par l'homme de l'art. Tel est le cas, par exemple pour la teneur en matière sèche d'une telle suspension destinée au broyage qui doit être impérativement comprise entre 25% et 50% en poids et de préférence égale à environ 40% en poids. Car, dans le cas où cette concentration est inférieure à 25%, le procédé décrit est économiquement peu intéressant à cause de sa faible productivité, et dans le cas où la concentration initiale en matière sèche est supérieure à 50%, l'efficacité du procédé de broyage diminue en raison de la forte augmentation de la viscosité du milieu qui devient un émpechement à la réalisation du broyage lui-même en donnant, de ce fait, une suspension de granulométrie grossière.

**0 100 947**

Ainsi, quand la concentration en matière sèche de la suspension destinée au broyage est choisie dans le domaine de 25% à 50% en poids, la granulométrie de Carbonate de Calcium obtenue après une très longue période de broyage, en présence de l'agent dispersant, peut être considérée comme favorable pour les applications pigmentaires, puisque 95% des particules ont leur plus grande dimension inférieure à deux microns.

Le fait de ne pas pouvoir pratiquer le broyage d'une suspension aqueuse de substances minérales à concentration supérieure à 50% à cause de l'augmentation brutale de la viscosité, a incité l'homme de l'art à trouver une nouvelle voie. Il a, dès lors, été proposé des procédés de mise en suspension aqueuse, et non plus de broyage, de substances minérales à haute teneur en matière sèche. Le brevet français n° 1 562 326 par exemple, relate un procédé de préparation d'une suspension aqueuse de substances minérales. Le but poursuivi par ce procédé consiste à obtenir une suspension aqueuse hautement concentrée en matière sèche et suffisamment stable pour qu'elle puisse être transportée sous cette forme depuis son lieu de fabrication jusqu'à son lieu d'exploitation. Le procédé proposé consiste à former une suspension aqueuse de matières minérales contenant de 70 à 55% en poids de matière sèche dont au moins 99% en poids des particules initiales ont une dimension inférieure ou égale à 50 microns, puis à agiter la dite suspension en présence d'un agent dispersant qui peut être un sel de Sodium ou de potassium d'un acide polyphosphorique, d'un acide polyacrylique, d'un acide polysilicique, etc..., obtenu par leur neutralisation complète au moyen d'un hydroxyde de sodium ou de potassium. Puis cet agent dispersant est introduit à raison de 0,05% à 0,5% en poids par rapport au poids de matière sèche de la dite suspension. L'auteur constate que la teneur en matière sèche de la suspension ne devait pas être supérieure à 85% en poids en raison de la forte augmentation de sa viscosité et ne pouvait pas être inférieure à 70% en poids sans provoquer une sédimentation préjudiciable.

Ainsi, l'art antérieur propose à l'homme de l'art des solutions qui ne peuvent pas le satisfaire pleinement.

L'une de ces solutions concerne le broyage en présence d'un agent dispersant, d'une suspension aqueuse de Carbonate de Calcium trop peu concentrée en matière sèche pour être intéressante, bien qu'elle ait l'avantage de produire une suspension pigmentaire de faible viscosité et bien affinée, donnant jusqu'à 95% de particules de dimension inférieure à deux microns.

L'autre de ces solutions concerne la préparation d'une suspension aqueuse à haute teneur en matière sèche, contenant 70% à 55% en poids de matériaux minéraux dont 99% des particules initiales ont une dimension inférieure ou égale à 50 microns, en introduisant dans le milieu un agent dispersant permettant de stabiliser ces particules. Mais ce procédé, bien que fournissant une suspension de faible viscosité, ne peut être retenu car la dimension des particules minérales constitutives est trop irrégulière et grossière pour les applications pigmentaires.

Comme les procédés préconisés par la littérature spécialisée ne répondaient pas aux exigences des utilisateurs de disposer de suspension aqueuse pigmentaire qui soit simultanément concentrée en matière sèche, de grande finesse et de viscosité faible et stable dans le temps, la demanderesse à la suite de nombreuses recherches à déjà proposé, dans le brevet français 2 488 814, un nouvel agent de broyage de substances minérales en milieu aqueux, permettant d'obtenir une suspension pigmentaire possédant les qualités souhaitées par l'applicateur. Cet agent de broyage, formé de polymères et/ou copolymères acryliques alcalins, est constitué par la seule fraction de ces polymères et/ou copolymères acryliques alcalins dont la viscosité spécifique se situe entre 0,3 et 0,8.

En effet, comme l'art antérieur l'avait exprimé, il était bien connu d'utiliser les polymères et/ou copolymères acryliques alcalins comme agent de dispersion des substances minérales en suspension aqueuse, mais non comme agent de broyage. Pour ce faire ces polymères et/ou copolymères acryliques alcalins sont préparés selon des procédés connus, par polymérisation radicalaire de l'acide acrylique en présence de régulateurs de polymérisation tels que par exemple des composés organiques à base d'Hydroxylamine et en présence d'initiateurs de polymérisation tels que les peroxydes et les persels, par exemple l'Eau Oxygénée, les persulfates, etc... et en opérant une neutralisation complète du polymérisat au moyen d'hydroxyde de sodium ou de potassium. Puis ce polymérisat est alors introduit en quantité adéquate dans la suspension aqueuse de matières minérales soumise à une agitation afin de favoriser la dispersion de la charge minérale.

Or, lors de ses recherches, la demanderesse souhaitant réaliser un broyage amélioré des matériaux en suspension aqueuse a tenté d'utiliser un tel polymérisat comme "agent de broyage" en l'introduisant dans la suspension des substances minérales contenant au moins 50% en poids de matières sèches, pourcentage qui avait été précisé dans l'art antérieur comme charge limite à ne pas dépasser et elle a alors observé que la suspension ainsi préparée et soumise à broyage devenait hautement visqueuse, de telle sorte qu'il s'avérait inopérant dans ces conditions, de broyer ou même de disperser d'une manière satisfaisante les matériaux minéraux.

Forte de cette constation, la Demanderesse a alors recherche d'une manière approfondie les causes fondamentales de l'augmentation de la viscosité, au cours de l'opération de broyage, de la suspension aqueuse de matériaux minéraux hautement concentrée en matière sèche et a observé que l'augmentation de la viscosité de la suspension était conditionnée par la viscosité spécifique moyenne des polymères et/ou copolymères acryliques alcalins utilisés comme agents de broyage et de viscosité spécifique moyenne inférieure à 0,8. Dès lors, en pratiquant de nombreuses opérations de broyage de suspensions aqueuses hautement chargées en matériaux minéraux, la Demanderesse a pu établir que la seule fraction des polymères et/ou copolymères acryliques alcalins qui se révèle posséder au mieux les qualités fondamentales d'un agent de broyage, est celle dont la viscosité spécifique se situe entre 0,3 et 0,5. Un tel agent de broyage décrit dans

3

**0 100 947**

le brevet français 2 488 814 offre un progrès important à l'égard de l'art antérieur jusqu'alors connu, puisque cette fraction de polymères et/ou copolymères acryliques alcalins autorise la transformation par broyage en suspension aqueuse à haute concentration en matière sèche, de substances minérales grossières en des particules très fines dont 95% d'entre elles ont une dimension inférieure à deux microns et dont 75% au moins d'entre elles ont une dimension inférieure à un micron, mais également l'obtention d'une suspension de substances minérales très fines dont la viscosité est beaucoup plus faible que celle obtenue par l'usage des adjuvants préconisés dans l'art antérieur.

Toutefois, malgré les améliorations considérables apportées par cet agent de broyage, ne serait- ce que par l'abaissement dans un rapport d'au moins 2/1 de la viscosité des suspensions de particules très fines mesurées à la sortie du broyage, il à été constaté que la viscosité des suspensions de particules minérales très fines, résultant du broyage en présence de cet agent, n'était pas absolument stable dans le temps, ladite viscosité, apres huit jours de repos par exemple, pouvant être de deux à cinq fois supérieure à celle mesurée sur ces mêmes suspensions, dès leur sortie du broyage.

Dès lors que les procédés préconisés ne répondaient pas aux exigences des utilisateurs, de disposer d'une suspension aqueuse pigmentaire qui soit simultanément concentrée en matière sèche, de grande finesse et de viscosité faible et stable dans le temps, la Demanderesse poursuivant ses recherches à trouvé et mis au point un agent de broyage des substances minérales, en milieu aqueux, permettant d'obtenir une suspension pigmentaire possédant les qualités souhaitées tout en éliminant les inconvénients précités.

Selon l'invention, l'agent de broyage en suspension aqueuse de matériaux minéraux grossiers, destiné à des applications pigmentaires constitué par les polymères et/ou copolymères acryliques acides, obtenus selon les procédés connus de polymérisation, se caractérise en ce qu'il est formé par lesdits polymères et/ou copolymères
a) au moins un agent de neutralisation disposant d'une fonction monovalente, et
b) au moins un agent de neutralisation disposant d'une fonction polyvalente, ou une amine.

Pour permettre la meilleure compréhension de l'objet de l'invention, il est souhaitable de rappeler qu'un "agent de neutralisation disposant d'une fonction monovalente", par exemple, possède la capacité de s'unir à un site actif des polymères et/ou copolymères acryliques acides.

Parce que la Demanderesse a été conduite à poursuivre ses recherches dans le domaine des agents de broyage en suspension aqueuse de matériaux minéraux grossiers et par la même, à multiplier les essais industriels, elle a été amenée à observer d'abord et à vérifier ensuite qu'il était possible de réaliser des suspensions aqueuses pigmentaires, simultanément plus concentrées en matière sèche que celles obtenues selon les procédés de l'art antérieur, de grande finesse, de viscosité faible dès la sortie du broyage, mais surtout très stable dans le temps, cette stabilité étant une amélioration, substantielle à l'égard des résultats acquis dans l'art antérieur, à condition que l'agent de broyage soit constitué par des polymères et/ou copolymères acryliques acides, dont les sites actifs sont complétement neutralisés par
a) au moins un agent de neutralisation disposant d'une fonction monovalente, et
b) au moins un agent de neutralisation disposant d'une fonction polyvalente, ou une amine.

L'agent de broyage selon l'invention est constitué, comme cela a été exprimé, par les polymères et/ou copolymères acryliques acides complètement neutralisés. Ces polymères et/ou copolymères acryliques résultant de la polymérisation selon les procédés connus en milieu aqueux, alcoolique, hydroalcoolique, aromatique ou aliphatique de l'un au moins des monomères et/ou comonomères suivants: acide acrylique et/ou méthacrylique, itaconique, crotonique, fumarique, anhydride maléique ou encore, isocrotonique, aconitique, mesaconique, sinapique, undecylénique, angélique, hydroxyacrylique, l'acroléine, l'acrylamide, l'acrylonitrile, les esters des acides acryliques et méthacryliques et en particulier le méthacrylate de diméthylaminoéthyle, les imidazoles, vinylpyrolidone, vinylcaprolactame, l'éthylène, le proprylène, l'isohutylène, le diisobutylène, l'acétate de vinyle, le styrène, l'alphaméthylstyrène, la méthylvinylcétone.

Ainsi le milieu de polymérisation peut être l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'héxane, l'heptane, le benzène, le toluène, le xylène, le mercaptoéthanol, le tertiododécylmercaptan, l'acide thioglycolique et ses esters, le n'dodécylmercaptan, les acides acétique, tartrique, lactique, citrique, gluconique, glucoheptonique, l'acide 2 mercaptopropionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

Les polymères et/ou copolymères acryliques destinés à être utilisés comme agent de broyage selon l'invention ont généralement une viscosité spécifique au plus égale à 25 et de préférence au plus égale à 10. Ces polymères résultent, comme cela a déjà été dit, de la polymérisation qui se pratique selon des procédés connus, en présence d'initiateurs et régulateurs.

La viscosité spécifique des polymères et/ou copolymères acryliques, qui est symbolisée par la lettre "$\eta$" est déterminée de la manière suivante:

On prépare une solution de polymère et/ou copolymère acrylique neutralisé à 100% (taux de neutralisation: 1) par l'hydroxyde de sodium pour la mesure, par dissolution de 50g sec du polymère et/ou copolymère dans un litre d'une solution d'eau distillée contenant 60g de NaCl. Puis on mesure avec un viscosimètre capillaire de constante de Baume égale à 0,000105 placé dans un bain thermostaté à 25°C, le temps d'écoulement d'un volume donné de la solution précitée contenant le polymère et/ou copolymère acrylique alcalin, ainsi que le temps d'écoulement de même volume de solution aqueuse de Chlorure de Sodium dépourvue dudit polymère

4

et/ou copolymère. Il est alors possible de définir la viscosité "$\eta$" grace à la relation suivante:

$$\eta = \frac{(\text{temps d'ecoulement de la solution de polymère}) - (\text{temps d'écoulement de la solution NaCl})}{\text{temps d'écoulement de la solution NaCl}}$$

Le tube capillaire est généralement choisi de telle manière que le temps d'écoulement de la solution de NaCl, dépourvue de polymére et/ou copolymère, soit d'environ 90 à 100 secondes, donnant ainsi des mesures de viscosité spécifique d'une très bonne précision.

L'agent de neutralisation disposant d'une fonction monovalente, est choisi dans le groupe constitué par les cations alcalins, en particulier le sodium et le potassium, ou encore l'ammonium, ou bien les amines primaires, secondaires ou tertiaires alyphatiques et/ou cycliques telles que par exemple les éthanolamines (mono, di, triéthanolamine), la mono et diéthylamine, la cyclohexylamine, la méthylcyclohexylamine.

L'agent de neutralisation disposant d'une fonction polyvalente est, quant à lui, choisi dans le groupe constitué par les cations divalents alcalino-terreux, en particulier le magnésium et le calcium, ou encore le zinc, de même que par les cations trivalents, dont en particulier l'aluminium, ou encore, par certains cations de valence plus élevée ainsi que des amines primaires et secondaires, aliphatiques et/ou cycliques.

La neutralisation des sites acides des polymères et/ou copolymères acryliques peut être obtenue par des combinaisons possibles entre au moins un agent de neutralisation disposant d'une fonction monovalente et au moins un agent de neutralisation disposant d'une fonction polyvalente.

Parmi les couples d'agents de neutralisation, il est courant d'utiliser des couples constitués par un agent disposant d'une fonction monovalente et un agent disposant d'une fonction divalente ou trivalente, tels que par' exemple les couples ($Na^+$ ou $K^+$ ou $NH_4^+$ et $ca^{++}$), ($Na^+$ ou $K^+$ ou $NH_4^+$ et $Mg^{++}$), ($Na^+$ ou $K^+$ ou $Nh_4^+$ et $Zn^{++}$), ($Na^+$ ou $K^+$ ou $NH_4^+$ et $Al^{+++}$), ($Na^+$ ou $K^+$ ou $NH_4^+$ et amine).

Parmi les triplets d'agents de neutralisation, il est intéressant d'utiliser des combinaisons diverses telles que, deux agents de neutralisation disposant d'une fonction monovalente avec un agent de neutralisation disposant d'une fonction polyvalente ou encore un agent de neutralisation disposant d'une fonction monovalente, avec deux agents de neutralisation disposants d'une fonction polyvalente, tels que par exemple les triplets ($Na^-$, $K^+$ et $Ca^{++}$), ($Na^+$, $NH_4^+$ et $Ca^{++}$), ou encore ($Na^+$, $Ca^{++}$, $Mg^{++}$) ($Na^+$, $Ca^{++}$, $Al^{+++}$), ($NH_4^+$, $Zn^{--}$, $Mg^{++}$)...

Toutes ces combinaisons de neutralisation ne peuvent être limitées aux quelques cas illustrant la potentialité de l'invention.

Chaque agent de neutralisation des sites actifs du polymérisat en solution, conduisant à l'agent de broyage selon l'invention, intervient selon des taux de neutralisation propres à chaque fonction de valence.

Le taux de neutralisation dans le cas d'au moins un agent de neutralisation disposant d'une fonction monovalente est compris entre 0,40 et 0,95 et de préférence entre 0,60 et 0,90.

Le taux de neutralisation dans le cas d'au moins un agent de neutralisation disposant d'une fonction polyvalente, est compris entre 0,60 et 0,05 et de préférence entre 0,40 et 0,10.

Il est évident, et la demanderesse l'a vérifié, que le taux de neutralisation complète des sites acides peut être obtenu, par équivalence, par mélange de fractions appropriées de polymères et/ou copolymères acryliques acides totalement neutralisés, certaines de ces fractions étant neutralisées par au moins un agent de neutralisation disposant d'une fonction monovalente tandis que les autres fractions sont neutralisées par au moins un agent de neutralisation disposant d'une fonction polyvalente.

Selon une variante, les polymères et/ou copolymères acryliques, destinés à être utilisés comme agent de broyage selon l'invention, peuvent être constitués par la seule fraction de ces polymères et/ou copolymères complètement neutralisés dont la viscosité spécifique se situe entre 0,3 et 0,3.

Dans ce cas, la fraction du polymère et/ou copolymère acrylique de viscosité spécifique comprise entre 0,3 et 0,8 destinée à être utilisée comme agent de broyage est généralement isolée et extraite de la solution qui résulte de la polymérisation de l'un au moins des monomères précités selon les procédés connus. Dès la fin de la polymérisation qui s'est pratiquée en présence des initiateurs et régulateurs bien connus de l'homme de l'art la solution du polymérisat obtenu est complètement neutralisée par au moins un agent de neutralisation disposant d'une fonction monovalente et par au moins un agent de neutralisation disposant d'une fonction polyvalente.

La solution du polymérisat ainsi neutralisé est ensuite traitée selon les procédés connus de l'homme de l'art, par un solvant polaire appartenant au groupe constitué par le Méthanol, l'Ethanol, le Propanol, l'Isopropanol, l'Acétone, le Tétrahydrofurane. Dès lors, il se produit une séparation en deux phases. La phase la moins dense, comportant la majeure fraction du solvant polaire et la fraction de polymère et/ou copolymère acrylique indésirable, est éliminée tandis que la phase aqueuse la plus dense est recueillie et constitue la fraction des polymères et/ou copolymères acryliques complètement neutralisés dont la viscosité spécifique est comprise entre 0,3 et 0,8.

Il est également possible et souhaitable dans certains cas d'affiner encore la sélection de la fraction des polymères et/ou copolymères acryliques complètement neutralisés en traitant à nouveau la phase aqueuse la

**0 100 947**

plus dense précédemment recueillie, au moyen d'une nouvelle quantité de solvant polaire, qui peut être différent de celui initialement utilisé, ou qui peut encore être un mélange de solvants polaires. Il apparaît à nouveau deux phases dont la plus dense, la phase aqueuse; est recueillie et constitue une fraction des polymères et/ou copolymères acryliques complètement neutralisés dont la viscosité spécifique se situe dans un domaine plus étroit. En pratique, il s'est révélé intéressant de sélectionner la fraction des polymères et/ou copolymères acryliques complètement neutralisés dont la viscosité spécifique est comprise entre 0,5 et 0,7.

En pratique, la phase liquide résultant de la polymérisation et contenant les polymères et/ou copolymères acryliques complètement neutralisés peut être utilisée sous cette forme comme agent de broyage des substances minérales à porphyriser mais elle peut également être traitée par tous moyens connus, pour en éliminer cette phase et isoler les polymères et/ou copolymères acryliques complètement neutralisés sous la forme d'une fine poudre qui peut être utilisée sous cette autre forme comme agent de broyage.

Dans le cas de la variante, la température à laquelle s'effectue le traitement de sélection de la fraction de polymère et/ou copolymère acrylique complètement neutralisée n'est pas critique par elle-même, puisqu'elle influence le seul coefficient de partage. En pratique, ce traitement de sélection s'effectue à la température ambiante, mais il n'est pas exclu de la réaliser à des températures plus élevées.

L'opération de broyage de la substance minérale à affiner consiste à broyer la substance minérale avec un corps broyant en particules très fines dans un milieu aqueux contenant l'agent de broyage.

En pratique, on forme une suspension aqueuse de la substance minérale à broyer, dont les grains ont une dimension initiale au plus égale à 50 microns, en une quantité telle que la concentration en matière sèche de ladite suspension est d'au moins 70% en poids.

A la suspension de la substance minérale à broyer on ajoute le corps broyant de granulométrie avantageusement comprise entre 0,20 millimètres et 4 millimètres. Le corps broyant se presente en général sous la forme de particules de matériaux aussi divers que l'Oxyde de Silicium, l'Oxyde d'Aluminium, l'Oxyde de Zirconium ou de leurs mélanges ainsi que les résines synthétiques de haute dureté, les aciers, etc...

Un exemple de composition de tels corps broyants est donné par le brevet français 2 203 691 qui décrit des éléments broyants formés de 30 à 70% en poids d'Oxyde de Zirconium, 0,1 à 5% d'Oxyde d'Aluminium et de 5 à 20% d'Oxyde de silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage telle que celle qui se produit dans un broyeur classique à microéléments.

L'agent de broyage constitué par le polymère et/ou copolymère acrylique complètement neutralisé selon l'invention, est également introduit au sein du mélange formé par la suspension aqueuse de substances minérales et par le corps broyant à raison de 0,2 à 2% en poids de la fraction séchée desdits polyméres par rapport à la masse de la substance minérale à affiner.

Le temps nécessaire pour aboutir à une excellente finesse de la substance minérale après broyage varie selon la nature et la quantité des substances minérales à porphyriser et selon le mode d'agitation utilisé et la température du milieu pendant l'opération de broyage.

Les substances minérales à affiner selon le procédé de l'invention peuvent être d'origine tres diverses telles que le carbonate de calcium et les dolomies, le sulfate de calcium, le kaolin, le dioxyde de titane, c'est-à-dire, toutes les substances minérales qui doivent être broyées pour être utilisables dans des applications aussi diversifiées que l'enduction des papiers, la pigmentation des peintures et enduits, la charge des caoutchoucs ou résines synthétiques, la matification des textiles synthétiques etc.

Ainsi, l'application de l'agent de broyage selon l'invention autorise la transformation par broyage en suspension aqueuse de haute concentration en matière sèche, de substances minérales grossières en des particules très fines dont 95% d'entre elles ont une dimension toujours inférieure à deux microns, et dont 75% au moins d'entre elles ont une dimension inférieure à un micron et d'obtenir une suspension de substances minérales très fines dont la viscosité est faible et stable dans le temps.

La portée et l'intérét de l'invention seront mieux perçus grâce aux exemples suivants:

## Exemple 1

Cet exemple dont le but est d'illustrer l'art antérieur concerne le broyage du Carbonate de Calcium en présence d'un agent de broyage qui est un polyacrylate de Sodium obtenus par polymérisation de l'Acide Acrylique en présence d'initiateurs et de régulateurs selon deux procédés connus de l'homme de l'art.

Un premier essai concerne le broyage du Carbonate de Calcium en présence de polyacrylate de Sodium obtenu par polymérisation radicalaire de l'Acide Acrylique dans l'eau, suivie d'une neutralisation complète par un seul agent de neutralisation disposant d'une fonction monovalente.

Un deuxième essai concerne le broyage du Carbonate de Calcium en présence de polyacrylate de Sodium obtenu par polymérisation radicalaire de l'Acide Acrylique en milieu aqueux, en présence d'Isopropanol, suivie d'une distillation de l'alcool et d'une neutralisation complète du polymérisat par l'Hydroxyde de Sodium, seul agent de neutralisation utilisé, disposant d'une fonction de neutralisation monovalente.

Ces deux essais ont été exécutés selon les mêmes critères expérimentaux, en effectuant le broyage dans le même appareillage, afin que les résultats obtenus puissent être comparés.

Pour chaque essai, on a préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau ci-après, exprimées en pour cent en poids sec par rapport à la masse de Carbonate de Calcium à broyer.

La suspension circulait dans un broyeur du type Dyno-Mill à cylindre fixe et impulseur tournant dont le corps broyant était constitué par des billes de corindon de diamètre compris dans l'intervalle 0,5 millimètre à 1,6 millimètre.

Le volume total occupé par le corps broyant était de 1150 centimètres cubes tandis que sa masse était de 3040 g.

La chambre de broyage avait un volume de 1400 centimètres cubes.

La vitesse circonférentielle du broyeur était de 10 mètres par secondes.

La suspension de Carbonate de Calcium était recyclée à raison de 18 litres par heure.

La sortie du broyeur Dyno-Mill était munie d'un séparateur de mailles 200 microns permettant de séparer la suspension résultant du broyage et le corps broyant.

La température lors de chaque essai de broyage était maintenue à 65°C.

La temps de broyage dans les conditions d'expérimentation préciitées était compris entre 60 et 100 minutes et exprimait le temps nécessaire pour l'obtention d'une substance minérale broyée dont au moins 75% des particules avaient une dimension inférieure à un micron.

A la fin du broyage, la viscosité de la suspension pigmentaire était mesurée à l'aide d'un viscosimètre Brookfield, à une température de 20°C et une vitesse de rotation de 100 tours par minute avec le mobile n° 3.

Après un temps de repos de 24 heures et de 8 jours, la viscosité de la suspension était à nouveau mesurée après une brève agitation.

Tous les résultats expérimentaux sont consignés dans le tableau 1.

| TABLEAU 1 | ESSAI 1 | ESSAI 2 |
|---|---|---|
| Substance minérale à broyer | $CaCO_3$ (urgonite) | $CaCO_3$ (urgonite) |
| Concentration en matière sèche de la suspension soumise au broyage | 76 % | 76 % |
| Agent de broyage Taux de neutralisation | Polyacrylate de Sodium 1 (100 %) | Polyacrylate de Sodium 1 (100 %) |
| Milieu de polymérisation | eua | eua et isopropanol |
| Viscosité spécifique de l'agent de broyage | 0,58 | 0,54 |
| Consommation en agent de broyage en % en poids sec/sec | 1,33 | 1,04 |
| pH du milieu de broyage | 9,2 | 9,2 |
| % substances minérales à 1 micron en fin de broyage | 78 | 75 |
| Température de broyage maintenue à: | 65°C | 65°C |
| Viscosité en cps à 20°C | | |
| — à la sortie du broyage | 850 | 500 |
| — après 24h de repos agitation préalable à la mesure | 1280 | 800 |
| — après 8 jours de repos agitation préalable à la mesure | 3600 | 1520 |

Le tableau révèle que la viscosité de la suspension sortant du broyage est élevée et que cette viscosité est instable dans le temps quelle que soit sa valeur initiale, puisqu'elle augmente d'une manière importante par repos de la suspension.

En outre, le tableau fait apparaître que le milieu de polymérisation ne joue pas un rôle significatif sur le niveau de la viscosité de la suspension à la sortie du broyage et sur le comportement de cette viscosité dans le temps.

## Exemple 2

Cet exemple, destiné à illustrer l'objet de l'invention, veut montrer l'influence mutuelle de chaque agent de neutralisation des sites actifs du polymérisat en solution conduisant à l'agent de broyage selon l'invention et permet d'illustrer l'influence des taux de neutralisation attachés à chaque fonction de valence des agents de neutralisation.

Dans l'essai n° 3, le broyage du carbonate de calcium a été réalisé en présence de l'acide polyacrylique obtenu comme dans l'essai 2 de l'exemple 1, par polymérisation radicalaire de l'acide acrylique en un milieu aqueux en présence d'isopropanol puis neutralisation complète du polymérisat par NaOH au taux de 0,90 (90%) et par CaO au taux de 0,1 (10%).

Dans l'essai n° 4, le broyage du carbonate de calcium a été réalisé en présence de l'acide polyacrylique polymérisé comme dans l'essai 2 de l'exemple 1, dont le polymérisat a été complètement neutralisé par NaOH au taux de 0,8 (80%) et par CaO au taux de 0,2 (20%).

Dans l'essai n° 5, le broyage du carbonate de calcium a été réalisé en présence de l'acide polyacrylique, polymérisé comme dans l'essai n° 2 de l'exemple 1, dont le polymérisat a été complètement neutralisé par NaOH au taux de 0,7 (70%) et par CaO au taux de 0,3 (30%).

Pour chacun des essais 3, 4 et 5, on a alors préparé une suspension aqueuse de carbonate de calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 2 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 2 ci-après.

0 100 947

| TABLEAU 2 | ESSAI 3 | ESSAI 4 | ESSAI 5 |
|---|---|---|---|
| Substances minérale à broyer | CaCO$_3$ (urgonite) | CaCO$_3$ (urgonite) | CaCO$_3$ (urgonite) |
| Concentration en matière sèche de la suspension au broyage | 76 % | 76 % | 76 % |
| Agent de broyage | Acide Poly-acrylique | Acide Poly-acrylique | Acide Poly-acrylique |
| Milieu de polymérisation | eau et iso-propanol | eau et iso-propanol | eau et iso-propanol |
| Taux de neutralisation pour agent disposant: — d'une fonction monovalente | Na$^+$:0,9 | Na$^+$:0,8 | Na$^+$:0,7 |
| — d'une fonction polyvalente | Ca$^{++}$:0,1 | Ca$^{++}$:0,2 | CA$^{++}$:0,3 |
| Viscosité spécifique de l'agent de broyage | 0,54 | 0,54 | 0,54 |
| Consommation en agent de broyage en % en poids sec/sec | 1,09 | 1,02 | 1,12 |
| pH du milieu de broyage | 9,2 | 9,2 | 9,2 |
| % substances minérales à 1 micron en fin de broyage | 79 | 79 | 79 |
| Température de broyage maintenue à: | 65°C | 65°C | 65°C |
| Viscosité en cps à 20°C — à la sortie du broyage | 610 | 360 | 300 |
| — après 24h de repos agitation préalable à la mesure | 780 | 350 | 310 |
| — après 8 jours de repos agitation préalable à la mesure | 1160 | 720 | 250 |

Ce deuxième tableau, par comparaison avec le tableau 1 et plus particulièrement avec l'essai 2 de l'exemple 1, révèle:

- L'importante diminution de la viscosité de la suspension de calcium, tant à la sortie de broyage qu'après 24 heures ou 8 jours de repos.

- L'influence bénéfique des taux de neutralisation attachés à chaque fonction de valence des agents de neutralisation, l'essai 5 se manifestant même par une diminution de la viscosité dans le temps, car en calculant le rapport viscosité après 8 jours de repos/ viscosité à la sortie de broyage, il apparait une diminution très importante de ce rapport dès lors qu'est appliqué le procédé selon l'invention:

Essai 1 - Art antérieur: rapport 4
Essai 2 - Art antérieur: rapport 3
Essai 3 - Invention: rapport 1,9
Essai 4 - Invention: rapport 2,0
Essai 5 - Invention: rapport 0,83

9

## Exemple 3

Cet exemple, destiné à illustrer l'objet de l'invention, concerne le broyage du même Carbonate de Calcium utilisé dans l'exemple 1, en présence d'un agent de broyage qui est un acide polyacrylique complètement neutralisé, obtenu par polymérisation de l'acide acrylique selon le même procédé que celui pratiqué pour l'essai 2 de l'exemple 1.

Dans un essai n° 6, qui illustre l'art antérieur, le broyage du Carbonate de Calcium a été réalisé en présence de l'acide polyacrylique obtenu comme dans l'essai n° 2, par polymérisation radicalaire de l'Acide Acrylique en un milieu aqueux, en présence d'isopropanol et neutralisation complète par l'Hydroxyde de potassium.

Dans un essai n° 7, qui illustre l'invention, le broyage du Carbonate de Calcium a été pratiqué en présence d'acide polyacrylique obtenu selon le procédé de l'essai n° 2 de l'exemple 1, par polymérisation radicalaire de l'Acide Acrylique en un milieu aqueux en présence d'Isopropanol et neutralisation complète du polymérisat par deux agents de neutralisation, l'hydroxyde de potassium au taux de 0,7 (70% des sites actifs) et l'hydroxyde de calcium aux taux de 0,3 (30% de sites actifs).

Pour chacun des essais 6 et 7, on a alors préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 3 ci-après, exprimées en pour cent en poids par rapport à la masse de Carbonate de Calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 3 ci-après.

| TABLEAU 3 | ESSAI 6 | ESSAI 7 |
|---|---|---|
| Substance minérale à broyer | $CaCO_3$ (urgonite) | $CaCO_3$ (urgonite) |
| Concentration en matière sèche de la suspension soumise au broyage | 76 % | 76 % |
| Agent de broyage | acide Poly-acrylique | Acide Polyacryli-que |
| Milieu de polymérisation | eau et iso-propanol | eau et iso-propanol |
| Taux de neutralisation pour agent disposant: | | |
| — d'une fonction monovalente | $K^+$:1,0 | $K^+$:0,7 |
| — d'une fonction polyvalente | — | $Ca^{++}$:0,3 |
| Viscosité spécifique de l'agent de broyage | 0,54 | 0,54 |
| Consommation en agent de broyage en % en poids sec/sec | 1,15 | 1,10 |
| pH du milieu de broyage | 9,2 | 9,2 |
| % substances minérales à 1 micron en fin de broyage | 79 | 79 |
| Température de broyage maintenue à: | 65°C | 65°C |
| Viscosité en cps à 20°C | | |
| — à la sortie du broyage | 610 | 410 |
| — après 24h de repos agitation préalable à la mesure | 1260 | 420 |
| — après 8 jours de repos agitation préalable à la mesure | 2100 | 550 |

Le troisième tableau montre par les comparaisons que l'on peut faire entre les essais 6 et 7, les essais 2 (du Tableau 1) et 6 et encore les essais 2 (du tableau 1) et 7, que l'utilisation pour la neutralisation complète du polymérisat d'un seul agent de neutralisation (essai 6: KOH) autre que celui utilisé dans le procédé de l'art antérieur (essai 2: NaOH) conduisait à des résultats inintéressants.

Par contre, la comparaison entre les essais 7 d'une part avec les essais 2 et 8 d'autre part est significative de l'importante diminution de la viscosité de la suspension de carbonate de calcium provenant d'une opération de broyage selon l'invention, c'est-à-dire réalisée en présence d'un agent de broyage constitué par un acide polyacrylique complètement neutralisé pour une part, au moyen d'un agent de neutralisation disposant d'une fonction monovalente (NaOH) et pour l'autre part, au moyen d'un agent de neutralisation disposant d'une fonction polyvalente (Ca(OH)$_2$).

### Exemple 4

Cet exemple, destiné à illustrer l'objet de l'invention, concerne le broyage du même Carbonate de Calcium utilisé dans l'exemple 1, en présence d'un agent de broyage qui est un Acide Polyméthacrylique obtenu par polymérisation de l'Acide Méthacrylique selon le procédé pratiqué pour l'essai 2 de l'exemple 1 et neutralisation complète du polymérisat.

Dans un essai n° 8 qui illustre l'art antérieur, le broyage du Carbonate de Calcium a été réalisé en présence de Polyméthacrylate de Sodium obtenu comme dans l'essai n° 2 de l'exemple 1, par polymérisation radicalaire de l'acide Méthacrylique en un milieu aqueux, en présence d'isopropanol et neutralisation complète du polymérisat par l'hydroxyde de sodium.

Dans un essai n° 9 qui illustre l'invention, le broyage du Carbonate de Calcium a été pratiqué en présence d'acide polyméthacrylique obtenu selon le procédé de l'essai n° 2 de l'exemple 1, par polymérisation radicalaire de l'acide méthacrylique en un milieu aqueux en présence d'isopropanol et neutralisation complète du polymérisat par deux agents de neutralisation, pour une part (taux de 0,7) au moyen de l'hydroxyde de sodium et pour l'autre part (taux de 0,3) au moyen de l'hydroxyde de calcium.

Pour chacun des essais 8 et 9 on a alors préparé une suspension aqueuse de carbonate de calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 4 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 4 ci-après.

11

| TABLEAU 4 | ESSAI 8 | ESSAI 9 |
|---|---|---|
| Substance minérale à broyer | $CaCO_3$ (urgonite) | $CaCO_3$ (urgonite) |
| Concentration en matière sèche de la suspension soumise au broyage | 76 % | 76 % |
| Agent de broyage | Acide Poly- mithacryli- que | Acide Poly- mithacryli- que |
| Milieu de polymérisation | eau et iso- propanol | eau et iso- propanol |
| Taux de neutralisation pour agent disposant: — d'une fonction monovalente — d'une fonction polyvalente | $Na^+$:1,0 | $Na^+$:0,7 $Ca^{++}$:0,3 |
| Viscosité spécifique de l'agent de broyage | 0,63 | 0,63 |
| Consommation en agent de broyage en % en poids sec/sec | 1,28 | 1,30 |
| pH du milieu de broyage | 9,2 | 9,2 |
| % substances minérales à 1 micron en fin de broyage | 79 | 79 |
| Température de broyage maintenue à: | 65°C | 65°C |
| Viscosité en cps à 20°C — à la sortie du broyage — après 24h de repos agitation préalable à la mesure — après 8 jours de repos agitation préalable à la mesure | 650 1050 1900 | 410 410 430 |

Le quatrième tableau révèle ainsi l'importante amélioration de la viscosité de la suspension de carbonate de calcium quand on utilise comme agent de broyage un acide polyméthacrylique complètement neutralisé pour une partie, au moyen d'un agent de neutralisation disposant d'une fonction monovalente (NaOH) et pour l'autre partie, au moyen d'un agent de neutralisation disposant d'une fonction polyvalente ($Ca(OH)_2$).

Gràce à l'agent de broyage selon l'invention, les suspensions de carbonate de calcium à haute concentration en matière sèche, acquièrent après broyage une viscosité très faible et stable dans le temps.

## Exemple 5

Cet exemple, destiné à illustrer l'objet de l'invention, concerne le broyage du même carbonate de calcium utilisé dans l'exemple 1, en présence d'un agent de broyage qui est l'acide d'un copolymère acrylique obtenu par copolymérisation de l'acide acrylique (7o%) et de l'acrylate de butyle (30%) selon le procédé pratique pour l'essai 2 de l'exemple 1 et neutralisation du polymérisat.

Dans un essai n° 10, qui illustre l'art antérieur, le broyage du carbonate de calcium a été réalisé en présence du copolymère d'acide acrylique-acrylate de butyle obtenu par copolymérisation radicalaire en un milieu d'isopropanol et neutralisation complète du polymérisat par de l'hydroxyde de potassium.

Dans un essai n° 11 qui illustre l'invention, le broyage du carbonate de calcium a été pratiqué en présence du copolymère d'acide acrylique et d'acrylate de butyle obtenu par polymérisation radicalaire en un milieu d'isopropanol et neutralisation complète du polymérisat, d'une part par de l'hydroxyde de potassium selon un taux de 0,70 et d'autre part par de l'hydroxyde de calcium selon un taux de 0,30.

12

0 100 947

Pour chacun des essais 10 et 11, on a alors préparé une suspension aqueuse de carbonate de calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 5 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 5 ci-après.

| TABLEAU 5 | ESSAI 10 | ESSAI 11 |
|---|---|---|
| Substance minérale à broyer | $CaCO_3$ (urgonite) | $CaCO_3$ (urgonite) |
| Concentration en matière sèche de la suspension soumise au broyage | 76 % | 76 % |
| Agent de broyage | copolymère d'acide acrylique et d'acrylate de butyle 70/30 | |
| Milieu de polymérisation | isopropanol | isopropanol |
| Taux de neutralisation pour agent disposant: | | |
| — d'une fonction monovalente | $K^+$:1,0 | $K^+$:0,7 |
| — d'une fonction polyvalente | | $Ca^{++}$:0,3 |
| Viscosité spécifique de l'agent de broyage | 0,70 | 0,70 |
| Consommation en agent de broyage en % en poids sec/sec | 0,98 | 0,98 |
| pH du milieu de broyage | 9,2 | 9,2 |
| % substances minérales à 1 micron en fin de broyage | 60 | 60 |
| Température de broyage maintenue à: | 65°C | 65°C |
| Viscosité en cps à 20°C | | |
| — à la sortie du broyage | 300 | 200 |
| — après 24h de repos agitation préalable à la mesure | 340 | 180 |
| — après 8 jours de repos agitation préalable à la mesure | 600 | 210 |

Bien que cet agent de broyage ne permette pas d'obtenir la même finesse de broyage (60% contre 79% pour les autres essais) de substances minérales à 1 micron en fin de broyage, le tableau 5 manifeste l'importante amélioration de la viscosité de la suspension de carbonate de calcium quand l'agent de broyage est complètement neutralisé selon l'invention (essai 11), alors que les viscosités sont fortes et instables dans le temps dans le cas où l'agent de broyage est neutralisé selon l'art antérieur.

Grâce à l'agent de broyage selon l'invention, les suspensions de carbonate de calcium à haute concentration en matière sèche, acquièrent après broyage une viscosité très faible et stable dans le temps.

13

## Exemple 6

Cet exemple, destiné à illustrer l'objet de l'invention, concerne le broyage du même carbonate de calcium utilisé dans l'exemple 1, en présence d'un agent de broyage qui est un acide polyacrylique complètement neutralisé, obtenu par polymérisation de l'acide acrylique selon les mêmes procédés que ceux pratiqués pour l'essai 2 de l'exemple 1.

Dans un essai n° 12 qui illustre l'invention, le broyage du carbonate de calcium a été pratiqué en présence de l'acide polyacrylique obtenu par polymérisation radicalaire de l'acide acrylique dans l'eau en présence d'isopropanol et neutralisation complète du polymérisat par deux agents de neutralisation, pour une part (taux de 0,7) au moyen d'hydroxyde de sodium et pour l'autre part (taux de 0,3) au moyen d'hydroxyde de magnésium.

Dans un essai n° 13 qui illustre l'invention, le broyage du carbonate de calcium a été pratiqué en présence de l'acide polyacrylique obtenu par polymérisation radicalaire de l'acide acrylique en un milieu aqueux en présence d'isopropanol et neutralisation complète du polymérisat, par deux agents de neutralisation, pour une part (taux de 0,83) au moyen d'hydroxyde de sodium et pour l'autre part (taux de 0,17) au moyen d'hydroxyde de zinc.

Dans un essai 14 qui illustre l'invention, le broyage du carbonate de calcium a été pratiqué en présence de l'acide polyacrylique obtenu par polymérisation radicalaire de l'acide acrylique en un milieu aqueux en présence d'isopropanol et neutralisation complète par deux agents de neutralisation, l'un au taux de 0,90 étant l'hydroxyde de sodium, l'autre au taux de 0,10 étant l'hydroxyde d'aluminium.

Pour chacun des essais 12, 13 et 14, on a alors préparé une suspension aqueuse de carbonate de calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 6 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 6 ci-après.

| TABLEAU 6 | ESSAI 12 | ESSAI 13 | ESSAI 14 |
|---|---|---|---|
| Substances minérale à broyer | $CaCO_3$ (urgonite) | $CaCO_3$ (urgonite) | $CaCO_3$ (urgonite) |
| Concentration en matière sèche de la suspension soumise au broyage | 76 % | 76 % | 76 % |
| Agent de broyage | Acide Poly-acrylique | Acide Poly-acrylique | Acide Poly-acrylique |
| Milieu de polymérisation | eau et iso-propanol | eau et iso-propanol | eau et iso-propanol |
| Taux de neutralisation pour agent disposant: — d'une fonction mo-novalente — d'une fonction po-lyvalente | $Na^+$:0,7 $Mg^{++}$:0,30 | $Na^+$:0,83 $Zn^{++}$:0,17 | $Na^+$:0,90 $Al^{+++}$:0,10 |
| Viscosité spécifique de l'agent de broyage | 0,54 | 0,54 | 0,54 |
| Consommation en agent de broyage en % en poids sec/sec | 1,06 | 1,16 | 1,08 |
| pH du milieu de broyage | 9,2 | 9,2 | 9,2 |

| TABLEAU 6 | ESSAI 12 | ESSAI 13 | ESSAI 14 |
|---|---|---|---|
| % substances minéra-les à 1 micron en fin de broyage | 78 | 79 | 78 |
| Température de broya-ge maintenue à: | 65°C | 65°C | 65°C |
| Viscosité en cps à 20°C<br>— à la sortie du broya-ge | 350 | 400 | 400 |
| — après 24h de repos agitation préalable à la mesure | 420 | 460 | 520 |
| — après 8 jours de repos agitation préalable à la me-sure | 470 | 530 | 1200 |

Ce sixième tableau révèle, par comparaison avec le tableau de l'exemple 1, l'extraordinaire diminution de la viscosité de la suspension de carbonate de calcium provenant d'une opération de broyage selon l'invention, (hormis pour l'essai 14 après 8 jours de repos), en opérant la neutralisation complète de l'acide polyacrylique au moyen d'au moins un agent de neutralisation disposant d'une fonction monovalente et d'au moins un agent de neutralisation disposant d'une fonction polyvalente.

En outre, ce sixième tableau montre par comparaison avec les essais 7, 9 et 11 qu'il est possible de substituer à $Ca^{++}$ comme agent de neutralisation $Mg^{++}$, $Zn^{++}$ ou encore $Al^{+++}$, l'agent de neutralisation disposant d'une fonction polyvalente pouvant être divalente ou trivalente.

**Exemple 7**

Cet exemple, destiné à illustrer l'objet de l'invention, concerne le broyage du même carbonate de calcium utilisé dans l'exemple 1, en présence d'un agent de broyage qui est un acide polyacrylique complètement neutralisé, obtenu par polymérisation de l'acide acrylique selon les mêmes procédés que celui pratiqué pour l'essai 2 de l'exemple 1.

Dans un essai n° 15 qui illustre l'invention, le broyage du carbonate de calcium a été réalisé en présence de l'acide polyacrylique obtenu par polymérisation radicalaire de l'acide acrylique dans l'eau en présence d'isopropanol et neutralisation complète du polymérisat par deux agents de neutralisation, l'un étant l'hydroxyde de sodium selon un taux de 0,7, l'autre étant l'hydroxyde de calcium selon le taux de 0,3.

Dans un essai n° 16 qui illustre l'invention, le broyage du carbonate de calcium a été pratiqué en présence de l'acide acrylique obtenu par polymérisation radicalaire de l'acide acrylique en un milieu aqueux en présence d'Isopropanol et neutralisation complète du polymérisat par deux agents de neutralisation, l'un étant l'hydroxyde de sodium selon un taux de 0,7, l'autre étant l'hydroxyde de magnésium selon un taux de 0,3.

Dans un essai n° 17 qui illustre l'invention, le broyage du carbonate de calcium a été pratiqué en présence de l'acide polyacrylique obtenu par polymérisation radicalaire de l'acide acrylique en un milieu aqueux en présence d'isopropanol et neutralisation complète du polymérisat par trois agents de neutralisation, le premier étant l'hydroxyde de sodium selon un taux de 0,7, le deuxième l'hydroxyde de calcium selon un taux de 0,15 et le troisième étant l'hydroxyde de magnésium selon un taux de 0,15.

Pour chacun des essais 15, 16 et 17, on a alors préparé une suspension aqueuse de carbonate de calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 7 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 7 ci-après.

| TABLEAU 7 | ESSAI 15 | ESSAI 16 | ESSAI 17 |
|---|---|---|---|
| Substances minérale à broyer | CaCO$_3$ (urgonite) | CaCO$_3$ (urgonite) | CaCO$_3$ (urgonite) |
| Concentration en matière sèche de la suspension soumise au broyage | 76 % | 76 % | 76 % |
| Agent de broyage | Acide Polyacrylique | Acide Polyacrylique | Acide Polyacrylique |
| Milieu de polymérisation | eau et isopropanol | eau et isopropanol | eau et isopropanol |
| Taux de neutralisation pour agent disposant: — d'une fonction monovalente | Na$^+$:0,7 | Na$^+$:0,7 | Na$^+$:0,7 |
| — d'une fonction polyvalente | Ca$^{++}$:0,3 | Mg$^{++}$:0,3 | CA$^{++}$:0,15 Mg$^{++}$:0,15 |
| Viscosité spécifique de l'agent de broyage | 0,54 | 0,54 | 0,54 |
| Consommation en agent de broyage en % en poids sec/sec | 1,12 | 1,06 | 1,22 |
| pH du milieu de broyage | 9,2 | 9,2 | 9,2 |
| % substances minérales à 1 micron en fin de broyage | 79 | 78 | 79 |
| Température de broyage maintenue à: | 65°C | 65°C | 65°C |
| Viscosité en cps à 20°C — à la sortie du broyage | 300 | 350 | 210 |
| — après 24h de repos agitation préalable à la mesure | 310 | 420 | 190 |
| — après 8 jours de repos agitation préalable à la mesure | 250 | 470 | 170 |

Ce septième tableau révèle par comparaison avec le tableau 1, la surprenante diminution de la viscosité de la suspension de carbonate de calcium provenant d'une opération de broyage selon l'invention.

En outre, l'étude du rapport (viscosité après 8 jours de repos)/(viscosité sortie broyage) est significative de l'excellence de l'invention, comme le montrent les valeurs suivantes:

Essai 1 - Art Antérieur: 4,2
Essai 2 - Art Antérieur: 3,0
Essai 15 - Invention: 0,83
Essai 16 - Invention: 1,34
Essai 17 - Invention: 0,81

On constate une diminution du rapport précité des viscosités qui, des valeurs 3-4 dans le cas de l'art antérieur, est proche et devient même inférieur à 1 (essais 15 et 17).

Enfin, il apparait un phénomène de synergie entre les essais 15, 16 et 17 car, si le couple d'agents de neutralisation (Na+ et Ca++) a une action plus bénéfique sur la valeur et la stabilité des viscosités que le couple (Na+ et Mg++), le triplet constitué par ces trois agents de neutralisation (Na+, Ca++ et Mg++) conduit encore à un abaissement plus important des viscosités dans le temps, tendance extrêment favorable quand des volumes importants de ces suspensions sont stockés pendant de longues périodes.

**Exemple 8**

Cet exemple, destiné à illustrer l'objet de l'invention concerne le broyage du même carbonate de calcium utilisé dans l'exemple 1, en présence d'un agent de broyage qui est un acide polyacrylique totalement neutralisé, obtenu par polymérisation de l'acide acrylique selon les mêmes procédés que ceux pratiqués pour l'essai 2 de l'exemple 1, suivi d'une extraction au moyen de l'isopropanol de la fraction du polymère acrylique de viscosité spécifique comprise entre 0,3 et 0,8.

Dans un essai n° 18 qui illustre l'art antérieur, le broyage du carbonate de calcium a été réalisé en présence de l'acide polyacrylique obtenu par polymérisation radicalaire de l'acide acrylique dans l'eau et neutralisation complète du polymérisat par de l'hydroxyde de sodium.

Dans un essai n° 19 qui illustre l'invention, le broyage du carbonate de calcium a été pratiqué en présence de l'acide polyacrylique obtenu selon le procédé de l'essai n° 2 de l'exemple 1, par polymérisation radicalaire de l'acide acrylique en un milieu aqueux en présence d'isopropanol et neutralisation complète du polymérisat pour une part au moyen d'hydroxyde de sodium selon un taux de 0,7 et pour l'autre part au moyen d'hydroxyde de calcium selon un taux de 0,3.

L'extraction au moyen de l'isopropanol de la fraction du polymère acrylique ayant une viscosité spécifique comprise entre 0,3 et 0,8 se faisait par séparation en deux phases, la phase la moins dense comportant la majeure partie du solvant polaire et les fractions de polymère acrylique indésirables était éliminée, tandis que la phase aqueuse la plus dense était recueillie et constituait la fraction du polymère acrylique ayant les qualités fondamentales d'un agent de broyage dont la viscosité spécifique était de 0,55.

Pour chacun des essais 18 et 19, on a alors préparé une suspension aqueuse de carbonate de calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 8 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 8 ci-après.

| TABLEAU 8 | ESSAI 18 | ESSAI 19 |
|---|---|---|
| Substance minérale à broyer | $CaCO_3$ (urgonite) | $CaCO_3$ (urgonite) |
| Concentration en matière sèche de la suspension soumise au broyage | 76 % | 76 % |
| Agent de broyage | acide Poly-acrylique | acide Polya-crylique |
| Milieu de polymérisation | eau et iso-propanol | eau et iso-propanol |
| Taux de neutralisation pour agent disposant: | | |
| — d'une fonction monovalente | Na+:1,0 | ·Na+:0,7 |
| — d'une fonction polyvalente | — | Ca++:0,3 |
| Viscosité spécifique de l'agent de broyage après extraction par l'iso-propanol | 0,55 | 0,55 |
| Consommation en agent de broyage en % en poids sec/sec | 0,9 | 1,1 |
| pH du milieu de broyage | 9,2 | 9,2 |

| TABLEAU 8 | ESSAI 18 | ESSAI 19 |
|---|---|---|
| % substances minérales à 1 micron en fin de broyage | 78 | 78 |
| Température de broyage maintenue à: | 65°C | 65°C |
| Viscosité en cps à 20°C | | |
| — à la sortie du broyage | 470 | 370 |
| — après 24h de repos agitation préalable à la mesure | 500 | 310 |
| — après 8 jours de repos agitation préalable à la mesure | 1140 | 350 |

Les résultats regroupés dans ce tableau révèlent l'importante diminution de la viscosité de la suspension de carbonate de calcium provenant d'une opération de broyage selon l'invention, c'est-à-dire réalisée en présence d'un agent de broyage constitué par la fraction du polymère totalement neutralisée et isolée au moyen d'un solvant polaire.

**Exemple 9**

Cet exemple, destiné à illustrer l'objet de l'invention, concerne le broyage du même carbonate de calcium utilisé dans l'exemple 1, en présence d'un agent de broyage qui est un acide polyacrylique complètement neutralisé, obtenu par polymérisation de l'acide acrylique selon les mêmes procédés que celui pratiqué pour l'essai 2 de l'exemple 1.

Dans un essai n° 20, le broyage du carbonate de calcium a été pratiqué en présence de l'acide polyacrylique obtenu par polymérisation radicalaire de l'acide acrylique dans l'eau en présence d'isopropanol et neutralisation complète du polymérisat pour une part au moyen de l'hydroxyde de sodium selon un taux de 0,7 et pour l'autre part de la méthylcyclohéxylamine selon un taux de 0,3.

Dans un essai n° 21, le broyage du carbonate de calcium a été pratiqué en présence de l'acide polyacrylique obtenu par polymérisation radicalaire de l'acide acrylique en un milieu aqueux en présence d'isopropanol et neutralisation complète du polymérisat, pour une part au moyen de l'hydroxyde de sodium selon un taux de 0,7 et pour l'autre part par de la triéthylamine selon un taux de 0,3.

Pour chacun des essais 20 et 21, on a alors préparé une suspension aqueuse de carbonate de calcium provenant du gisement d'Orgon (France) ayant une granulométrie inférieure à 43 microns.

La suspenion aqueuse avait une concentration en matière sèche de 76 % en poids par rapport à la masse totale.

L'agent de broyage était introduit dans cette suspension selon les quantités indiquées dans le tableau 9 ci-après, exprimées en pour cent en poids par rapport à la masse de carbonate de calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 9 ci-après.

| TABLEAU 9 | ESSAI 20 | ESSAI 21 |
|---|---|---|
| Substance minérale à broyer | $CaCO_3$ (urgonite) | $CaCO_3$ (urgonite) |
| Concentration en matière sèche de la suspension soumise au broyage | 76 % | 76 % |
| Agent de broyage | acide poly- acrylique | acide poly- acrylique |
| Milieu de polymérisation | eau et iso- propanol | eau et iso- propanol |
| Taux de neutralisation pour agent disposant: | | |
| — d'une fonction monovalente | $Na^+$:0,7 | $Na^+$:0,7 |
| — d'une fonction polyvalente | M.C.H.:0,3 | T.E.A.:0,3 |
| Viscosité spécifique de l'agent de broyage | 0,54 | 0,54 |
| Consommation en agent de broyage en % en poids sec/sec | 1,05 | 0,89 |
| pH du milieu de broyage | 9,2 | 9,2 |
| % substances minérales à 1 micron en fin de broyage | 76 | 76 |
| Température de broyage maintenue à: | 65°C | 65°C |
| Viscosité en cps à 20°C | | |
| — à la sortie du broyage | 250 | 300 |
| — après 24h de repos agitation préalable à la mesure | 240 | 300 |
| — après 8 jours de repos agitation préalable à la mesure | 350 | 370 |

Ce neuvième tableau révèle, par comparaison avec le tableau de l'exemple 1, la forte diminution de la viscosité de la suspension de carbonate de calcium provenant d'une opération de broyage selon l'invention.

## Revendications

1) Agent de broyage en suspension aqueuse de matériaux minéraux grossiers destinés à des applications pigmentaires constitué par les polymères et/ou copolymères acryliques acides, caractérisé en ce qu'il est formé par lesdits polymères et/ou copolymères complètement neutralisés par
   a) au moins un agent de neutralisation disposant d'une fonction monovalente, et
   b) au moins un agent de neutralisation disposant d'une fonction polyvalente, ou une amine.

2) Agent de broyage selon la revendication 1 caractérisé en ce que l'agent de neutralisation disposant d'une fonction monovalente est choisi dans le groupe constitué par les cations alcalins, l'ammonium et les amines primaires, secondaires ou tertiaires aliphatiques et/ou cycliques.

3) Agent de broyage selon la revendication 1 caractérisé en ce que l'agent de neutralisation disposant d'une fonction polyvalente appartient au groupe constitué par les cations divalents et trivalents ainsi que les di- ou polyamines primaires et secondaires aliphatiques et/ou cycliques.

4) Agent de broyage selon la revendication 3 caractérisé en ce que les cations divalents sont les alcalinoterreux et le zinc.

5) Agent de broyage selon la revendication 3 caractérisé en ce que un cation trivalent préférentiel est l'aluminium.

6) Agent de broyage selon l'une quelconque des revendications 1 à 5 caractérisé en ce que la neutralisation est effectuée au moyen de deux agents de neutralisation disposant d'une fonction monovalente et d'un agent de neutralisation disposant d'une fonction polyvalente.

7) Agent de broyage selon l'une quelconque des revendications 1 à 6 caractérisé en ce que la neutralisation est effectuée par un agent de neutralisation disposant d'une fonction monovalente et deux agents de neutralisation disposant d'une fonction polyvalente.

8) Agent de broyage selon l'une quelconque des revendications 1 à 7 caractérisé en ce que le taux de neutralisation de l'agent disposant d'une fonction monovalente est compris entre 0,40 et 0,95 et de préférence entre 0,60 et 0,90.

9) Agent de broyage selon l'une quelconque des revendications 1 à 8 caractérisé en ce que le taux de neutralisation de l'agent disposant d'une fonction polyvalente est compris entre 0,60 et 0,05 et de préférence entre 0,40 et 0,10.

10) Agent de broyage selon la revendication 1 caractérisé en ce que cet agent est formé de la fraction des polymères et/ou copolymères acryliques acides, totalement neutralisés, ayant une viscosité spécifique comprise entre 0,3 et 0,8.

11) Agent de broyage selon l'une quelconque des revendications 1 à 10 caractérisé en ce que ledit agent résulte de la polymérisation ou copolymérisation de l'un au moins des monomères et/ou comonomères constitué par le groupe des acides acrylique, méthacrylique, itaconique, crotonique, fumarique et anhydride maléique.

12) Procédé de broyage en suspension aqueuse de matériaux minéraux, destiné à des applications pigmentaires consistant à préparer une suspension aqueuse de ces matériaux, à introduire un agent de broyage choisi parmi les polymères et/ou copolymères acryliques, à ajouter à la suspension un corps broyant et à soumettre le mélange ainsi réalisé à une action mécanique de brassage, caractérisé en ce que, selon l'une quelconque des revendications 1 à 11, ledit polymère et/ou copolymère acrylique constituant l'agent de broyage est totalement neutralisé par
a) au moins un agent de neutralisation disposant d'une fonction monovalente, et
b) au moins un agent de neutralisation disposant d'une fonction polyvalente, ou une amine.

13) Procédé de broyage selon la revendication 12 caractérisé en ce que la suspension aqueuse de matériaux minéraux à broyer comporte au moins 70 % en poids de matières sèches.

14) Procédé de broyage selon la revendication 12 caractérisé en ce que l'agent de broyage est introduit au sein de la suspension à raison de 0,2 % à 2 % en poids de la fraction séchée dudit polymère par rapport à la masse de la substance minérale à broyer.

15) Procédé de broyage selon la revendication 12 caractérisé en ce que le corps broyant se présente sous la forme de particules granuleuses dont la granulométrie est comprise entre 0,2 et 4 millimètres.

16) Procédé de broyage selon la revendication 14 caractérisé en ce que le corps broyant est un oxyde de silicium, oxyde d'aluminium, oxyde de zirconium ou de leurs mélanges, les aciers, ainsi que les résines synthétiques de haute dureté.

17) Procédé de broyage selon la revendication 12 caractérisé en ce que le corps broyant est ajouté à la suspension aqueuse en une quantité telle que le rapport en poids entre le matériaux de broyage est d'au moins 2/1, ce rapport étant de préférence compris entre 3/1 et 5/1.

## Patentansprüche

1. Hilfsmittel zum Mahlen von für Pigmentierungsanwendungen bestimmten grobkörnigen mineralischen Stoffen in wäßriger Suspension, das aus den Polymeren und/oder Copolymeren von Acrylsäuren besteht,
dadurch gekennzeichnet, daß es durch die genannten Polymeren und/oder Copolymeren gebildet wird, die vollständig neutralisiert sind durch
a) mindestens ein Neutralisationsmittel mit einer monovalenten Funktion und
b) mindestens ein Neutralisationsmittel mit einer polyvalenten Funktion oder ein Amin.

2. Mahlhilfsmittel nach Anspruch 1, dadurch gekennzeichnet, daß das Neutralisationsmittel mit einer monovalenten Funktion ausgewählt wird aus der Gruppe, die gebildet wird von den Alkalikationen, dem Ammonium und den primären, sekundären oder tertiären aliphatischen und/oder cyclischen Aminen.

3. Mahlhilfsmittel nach Anspruch 1, dadurch gekennzeichnet, daß das Neutralisationsmittel mit einer polyvalenten Funktion zu der Gruppe gehört, die von den zweiwertigen und dreiwertigen Kationen sowie den primären und sekundären aliphatischen und/oder cyclischen Di- oder Polyaminen gebildet wird.

4. Mahlhilfsmittel nach Anspruch 3, dadurch gekennzeichnet, daß die zweiwertigen Kationen die Erdalkalikationen und das Zink sind.

5. Mahlhilfsmittel nach Anspruch 3, dadurch gekennzeichnet, daß das bevorzugte dreiwertige Kation das Aluminium ist.

6. Mahlhilfsmittel nach einem der Ansprüche 1 bis 5, dadurch gekennzeichnet, daß die Neutralisation mit zwei Neutralisationsmitteln mit einer monovalenten Funktion und mit einem Neutralisationsmittel mit einer polyvalenten Funktion durchgeführt wird.

7. Mahlhilfsmittel nach einem der Ansprüche 1 bis 6, dadurch gekennzeichnet, daß die Neutralisation durch ein Neutralisationsmittel mit einer monovalenten Funktion und zwei Neutralisationsmittel mit einer polyvalenten Funktion durchgeführt wird.

8. Mahlhilfsmittel nach einem der Ansprüche 1 bis 7, dadurch gekennzeichnet, daß der Neutralisationsgrad des Mittels mit einer monovalenten Funktion zwischen 0,40 und 0,95 und vorzugsweise zwischen 0,60 und 0,90 liegt.

9. Mahlhilfsmittel nach einem der Ansprüche 1 bis 8, dadurch gekennzeichnet, daß der Neutralisationsgrad des Mittels mit einer polyvalenten Funktion zwischen 0,60 und 0,05 und vorzugsweise zwischen 0,40 und 0,10 liegt.

10. Mahlhilfsmittel nach Anspruch 1, dadurch gekennzeichnet, daß das Mittel durch die Fraktion der vollständig neutralisierten Acrylsäurepolymeren und/oder -copolymeren besteht, die eine spezifische Viskosität zwischen 0,3 und 0,8 besitzt.

11. Mahlhilfsmittel nach einem der Ansprüche 1 bis 10, dadurch gekennzeichnet, daß das Mittel durch Polymerisation oder Copolymerisation von wenigstens einem der Monomeren und/oder Comonomeren aus der Gruppe der Acryl-, Methacryl-, Itacon-, Croton-, Fumarsäure und Maleinsäureanhydrid erhalten wird.

12. Verfahren zum Mahlen von für Pigmentierungsanwendungen bestimmten mineralischen Stoffen in wäßriger Suspension, das in der Herstellung einer wäßrigen Suspension dieser Stoffe, in der Zugabe eines Mahlhilfsmittels, das unter den Acrylpolymeren und/oder Copolymeren ausgewählt ist, in der Zugabe eines Mahlkörpers zu der Suspension und in dem Unterwerfen der so hergestellten Mischung unter eine mechanische Rühreinwirkung besteht,

dadurch gekennzeichnet, daß das genannte Polyacrylpolymere und/oder -copolymere, gemäß einem der Ansprüche 1 bis 11, das das Mahlhilfsmittel bildet, vollständig neutralisiert ist durch a) mindestens ein Neutralisationsmittel mit einer monovalenten Funktion und

b) mindestens ein Neutralisationsmittel mit einer polyvalenten Funktion oder ein Amin.

13. Verfahren zum Mahlen nach Anspruch 12, dadurch gekennzeichnet, daß die wäßrige Suspension der zu mahlenden mineralischen Stoffe mindestens 70 Gew.% Trockensubstanz enthält.

14. Verfahren zum Mahlen nach Anspruch 12, dadurch gekennzeichnet, daß das Mahlhilfsmittel in einer Menge von 0,2 bis 2 Gew.% des Trockenanteils des genannten Polymeren, bezogen auf die Masse der zu mahlenden mineralischen Substanz, in die Suspension eingesetzt wird.

15. Verfahren zum Mahlen nach Anspruch 12, dadurch gekennzeichnet, daß der Mahlkörper in Form von körnigen Teilchen vorliegt, deren Teilchengröße zwischen 0,2 und 4 mm liegt.

16. Verfahren zum Mahlen nach Anspruch 14, dadurch gekennzeichnet, daß der Mahlkörper aus Siliciumoxid, Aluminiumoxid, Zirkoniumoxid oder ihren Mischungen, aus Stahl sowie Kunstharzen hoher Härten bestehen.

17. Verfahren zum Mahlen nach Anspruch 12, dadurch gekennzeichnet, daß der Mahlkörper der wässrigen Suspension in einer solchen Menge zugesetzt wird, daß das Gewichtsverhältnis zwischen dem Mahlmaterial und der zu mahlenden mineralischen Substanz mindestens 2/1 beträgt, wobei das Verhältnis vorzugsweise zwischen 3/1 und 5/1 liegt.

## Claims

1. Grinding agent in aqueous suspension of coarse mineral materials intended for pigmenting applications, constituted by acrylic acid polymers and/or copolymers, characterised in that it is formed by the said polymers and/or copolymers completely neutralised by

a) at least one neutralising agent having a monovalent function, and

b) at least one neutralising agent having a polyvalent function, or an amine.

2. Grinding agent according to Claim 1, characterised in that the neutralising agent having a monovalent function is selected from the group constituted by alkaline cations, ammonia and primary, secondary or tertiary, aliphatic and/or cyclic amines.

3. Grinding agent according to Claim 1, characterised in that the neutralising agent having a polyvalent function belongs to the group constituted by divalent and trivalent cations and also primary and secondary, aliphatic and/or cyclic di- or polyamines.

4. Grinding agent according to Claim 3, characterised in that the divalent cations are the alkaline earths and zinc.

5. Grinding agent according to Claim 3, characterised in that a preferred trivalent cation is aluminium.

6. Grinding agent according to any one of Claims 1 to 5, characterised in that the neutralisation is carried out by means of two neutralising agents having a monovalent function and one neutralising agent having a polyvalent function.

7. Grinding agent according to any one of Claims 1 to 6, characterised in that the neutralisation is carried out by one neutralising agent having a monovalent function and two neutralising agents having a polyvalent function.

8. Grinding agent according to any one of Claims 1 to 7, characterised in that the rate of neutralisation of the agent having a monovalent function is comprised between 0.40 and 0.95 and preferably between 0.60 and 0.90.

9. Grinding agent according to any one of Claims 1 to 8, characterised in that the rate of neutralisation of the agent having a polyvalent function is comprised between 0.60 and 0.05 and preferably between 0.40 and 0.10.

10. Grinding agent according to Claim 1, characterised in that this agent is formed of the fraction of acrylic acid polymers and/or copolymers, totally neutralised, having a specific viscosity comprised between 0.3 and 0.8.

11. Grinding agent according to any one of Claims 1 to 10, characterised in that the said agent results from the polymerisation or copolymerisation of at least one of the monomers and/or comonomers constituted by the group of acrylic, methacrylic, itaconic, crotonic, fumaric acids and maleic anhydride.

12. Grinding process in aqueous suspension of mineral materials, intended for pigmenting applications, consisting of preparaing an aqueous suspension of these materials, of introducing a grinding agent selected from the acrylic polymers and/or copolymers, of adding to the suspension a grinding substance and of subjecting the mixture thus formed to a mechanical stirring action, characterised in that, according to any one of Claims 1 to 11, the said acrylic polymer and/or copolymer constituting the grinding agent is totally neutralised by

a) at least one neutralising agent having a monovalent function, and

b) at least one neutralising agent having a polyvalent function, or an amine.

13. Grinding process according to Claim 12, characterised in that the aqueous suspension of mineral materials for grinding comprises at least 70% by weight of dry matter.

14. Grinding process according to Claim 12, characterised in that the grinding agent is introduced to the core of the suspension at the rate of 0.2% to 2% by weight of the dried fraction of the said polymer in relation to the mass of the mineral substance for grinding.

15. Grinding process according to Claim 12, characterised in that the grinding substance is present in the form of granular particles, the grain size of which is comprised between 0.2 and 4 millimetres.

16. Grinding process according to Claim 14, characterised in that the grinding substance is a silicon oxide, aluminium oxide, zirconium oxide or mixtures thereof, steels, and also synthetic resins with a high degree of hardness.

17. Grinding process according to Claim 12, characterised in that the grinding substance is added to the aqueous suspension in a quantity such that the ratio in weight between the grinding materials is at least 2/1, this ratio preferably being comprised between 3/1 and 5/1.